(19) Europäisches Patentamt / European Patent Office / Office européen des brevets

(11) EP 1 216 208 B1

(12) EUROPÄISCHE PATENTSCHRIFT

(45) Veröffentlichungstag und Bekanntmachung des Hinweises auf die Patenterteilung:
**11.04.2012 Patentblatt 2012/15**

(21) Anmeldenummer: **00960463.8**

(22) Anmeldetag: **16.08.2000**

(51) Int Cl.:
***C02F 1/68*** *(2006.01)*

(86) Internationale Anmeldenummer:
**PCT/EP2000/007980**

(87) Internationale Veröffentlichungsnummer:
**WO 2001/021533 (29.03.2001 Gazette 2001/13)**

# (54) VERFAHREN ZUR VERBESSERUNG DER WASSERQUALITÄT VON HALTERUNGSWASSERN

METHOD FOR IMPROVING WATER QUALITY OF TANK SYSTEMS

PROCEDE D'AMELIORATION DE LA QUALITE DE L'EAU DANS DES BASSINS DE RECEPTION

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.09.1999 DE 19944799**

(43) Veröffentlichungstag der Anmeldung:
**26.06.2002 Patentblatt 2002/26**

(73) Patentinhaber: **Tetra GmbH**
**49324 Melle (DE)**

(72) Erfinder: **RITTER, Günter**
**D-32257 Bünde (DE)**

(74) Vertreter: **Zimmermann & Partner**
**Postfach 330 920**
**80069 München (DE)**

(56) Entgegenhaltungen:
**EP-A1- 0 882 675** **WO-A-97/34838**
**DE-A1- 19 704 953** **DE-U1- 29 617 181**

- **Whitehall-Much: "Beileger zu dem produkt "CENTRUM" - Nahrungsergänzugsmittel" In: "Beileger zu dem produkt "CENTRUM" - Nahrungsergänzugsmittel", 1997, Whitehall-Much GmbH, Münster pages 1-1, * ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 216 208 B1

## Beschreibung

Die Erfindung betrifft einzelne Verfahren zur Verbesserung der Wasserqualität bzw. Korrektur und Einstellung wichtiger chemischer Wasserparameter von biologischen Hälterungssystemen unter Verwendung ökologisch neutraler, chemisch und mikrobiologisch wirkender Wasserzusätze,eine Kombination mehrerer Verfahren zur Verbesserung der Wasserqualität in biologischen Hälterungssystemen sowie ein hierbei verwendbares Mehrkomponentenprodukt.

In biologischen Hälterungssystemen, z. B. Aquarien, Aquaterrarien und Gartenteichen, kommt es durch die tägliche Fütterung der darin gehälterten Fische und anderen Wassertiere zu kumulierenden Veränderungen wichtiger chemischer Wasserparameter und demzufolge zu einer ständigen Verschlechterung der Wasserqualität. Daraus leitet sich eine entsprechend reduzierte Lebensqualität der gehälterten Fische und anderen Wassertiere ab.

Besitzt das Ausgangswasser, z. B. Leitungswasser, eine ausreichende Qualität, so läßt sich durch häufige teilweise oder vollständige Wasserwechsel einer hälterungsbedingten Verschlechterung der Wasserqualität entgegenwirken. Die Prozedur des Wasserwechsels ist für den Aquarianer umständlich und unbequem, für die gehälterten Fische und anderen Wasserorganismen nicht ohne, z. T. erhebliche Gefährdung durch unerwünschte Eigenschaften bzw. Zusammensetzungen des frischen Ausgangswassers, wie beispielsweise Chlor oder Schwermetalle.

Eine Minimierung der Wasserwechselhäufigkeit und -menge wäre demnach erstrebenswert, wenn es - wie in der vorliegenden Erfindung beschrieben - gelingt, die Verschlechterung der Wasserqualität zurückzudrängen oder zu eliminieren.

Im einzelnen kommt es in biologischen Hälterungssystemen zu folgenden, die Wasserqualität verschlechternden Veränderungen wichtiger Wasserparameter. Diesen wird teilweise durch bereits bekannte Maßnahmen begegnet.

A) Ein Beispiel für solche Veränderungen ist der Anstieg der Phosphatkonzentration durch ständigen Eintrag mit dem Futter. Der Phosphatanstieg auf Werte über 10 - 20 mg/l ist nachteilig, da das unerwünschte Algenwachstum durch Phosphat gefördert wird.

Bekannt sind folgende Maßnahmen zur Phosphatreduktion:

a) Bindung von Phosphat an $Al^{3+}$- und/oder $Fe^{3+}$-Oxide (Hydroxidgruppen enthaltende Granulate) die in das Filtersystem eingebracht werden. Nachteilig ist ihre begrenzte Kapazität. Nach ihrer Erschöpfung wird es erforderlich, die Granulate auszuwechseln, was häufig recht umständlich ist. Mißt der Aquarianer nicht regelmäßig den Phosphatgehalt, wird er die Erschöpfung des Materials nicht erkennen und die $PO_4^{3-}$-Konzentration im Hälterungswasser wird wieder ansteigen, d.h. der Behandlungserfolg dieser Methode ist häufig nur unzureichend.

b) Der Zusatz gelöster anorganischer $Al^{3+}$- und/oder $Fe^{3+}$-Salze führt bei regelmäßiger Anwendung ebenfalls zur Senkung der $PO_4^{3-}$-Konzentration. Nachteile dieses Verfahrens sind:

- Hohe Fischtoxizität der gelösten anorganischen $Al^{3+}$- und $Fe^{3+}$-Salze,
- Anreicherung des Wassers mit Anionen, wie z. B. Chlorid und Sulfat,
- Reduktion der Carbonathärte, des $HCO_3^-$-und $CO_3^{2-}$-Gehaltes und damit
- Verringerung der Pufferkapazität,
- Senkung des pH-Niveaus und Gefahr des Säuresturzes bei KH = - 0 °dH,
- Trübung des Wassers und unschöne Ausflockung von $Al(OH)_3$, und $Fe(OH)_3$.

B) Ein weiteres Beispiel für die genannten unerwünschten Veränderungen ist der Anstieg der Nitratkonzentration durch ständigen Eintrag von Proteinen und anderen Stickstoffquellen mit dem Futter. Alle aus dem Futter herrührenden Stickstoffquellen, zum großen Teil Proteine, werden mikrobiell über Ammoniak und Nitrit zu Nitrat oxidiert. Der ständige Nitratanstieg stellt eine unnatürliche Belastung des Hälterungswassers dar, der für den Aquarianer unerwünscht ist. Häufig ist bereits der Nitratgehalt des Ausgangswassers so hoch, z. B. bei 25 - 50 mg/l, sodaß die natürlichen $NO_3^-$-Konzentration von wenigen mg/l durch Wasserwechsel nie erreichbar werden.

Zur Senkung des Nitratgehaltes sind folgende Maßnahmen bekannt:

a) Senkung des Nitratgehaltes durch Anionenaustauscher, meist in Chloridform. Nachteilig hierbei ist der Ersatz der Nitrationen durch die Beladungsanionen des Austauschers, meist Chlorid, und der Ersatz von Sulfat-und Hydrogencarbonationen. Neben der unerwünschten Absenkung der Carbonathärte wird die chemische Wasserzusammensetzung völlig verändert.

b) Denitrifikation in anaerobem Milieu bzw. in Anaerobreaktoren. Durch Einbringung von praktisch unlöslichem, biologisch abbaubarem organischem, stickstoffreiem Material in Granulatform in das Filtersystem werden durch starke $O_2$-Zehrung anaerobe Bereiche geschaffen, in denen Nitrat als Sauerstoffquelle zu $N_2$ reduziert wird. Nachteilig ist:

- die unsichere Dosierung,
- die unsichere Prozesssteuerung und Prozessbeherrschbarkeit,
- die bei kleinen $NO_3^-$-Konzentrationen zu erwartende Sulfatreduktion zu hochgiftigem Schwefelwasserstoff.

C) Die nitrifikationsbedingte Absenkung der Carbonathärte bildet ein weiteres Beispiel für die genannten unerwünschten Wasserveränderungen. Die Oxidation des ständig zugeführten organischen Stickstoffes läuft über die von nitrifizierenden Bakterien ermöglichte Oxidation von Ammoniak zu Nitrit. Bei diesem biologischen Prozeß entsteht pro Mol Ammoniak ein Mol $H^+$-Ionen. Die freigesetzten $H^+$-Ionen reagieren mit vorhandenen Basen, meist Hydrogencarbonat als Bildner der Carbonathärte, unter Protonierung und Reduktion der Carbonathärte.

Zur Kompensierung der Carbonathärte-Verluste (bzw. $HCO_3^-$-Verluste) aber auch zur Erhöhung der Carbonathärte sind folgende Maßnahmen bekannt:

a) Zusatz von $NaHCO_3$ und/oder $Na_2CO_3$ als Pulver oder als Lösung. Das Verfahren funktioniert zuverlässig, ist aber mit dem folgenden Nachteilen behaftet:

- Bei $NaHCO_3$/ $Na_2CO_3$-Gemischen kommt es zu raschen pH-Erhöhungen im Hälterungswasser, die zu erheblichem Stress der Organismen führen.
- In Wässern mit erhöhten Ammoniumgehalten wird parallel zur pH-Erhöhung eine u. U. tödliche Menge an Ammoniak freigesetzt.
- Die Wasserlöslichkeit von $NaHCO_3$ ist relativ niedrig, so daß hochkonzentrierte flüssige Produkte mit bequemer Anwendung nicht möglich werden.

b) Zusatz von frisch zubereiteten Lösungen, die neben gelöstem Calciumhydrogencarbonat noch viel freies $CO_2$ enthalten. Das überschüssige $CO_2$ kann zu einer raschen $CO_2$-Schädigung der Organismen führen. Neben der $HCO_3$-Konzentration wird hier auch die $Ca^{2+}$-Konzentration erhöht, was nicht immer erwünscht ist.

Ferner können chemisch und biologisch verursachte Verluste an gelöstem Calciumhydrogencarbonat unerwünschte Wasserveränderungen herbeiführen. Durch $CO_2$-Verbrauch und die damit verbundene pH-Erhöhung wird das Kalk/Kohlensäure-Gleichgewicht in Richtung Kalkabscheidung verschoben. Der nachteilige Verlust an gelöstem Ca $(HCO_3)_2$ führt zu einer entsprechenden Senkung der Calciumkonzentration und der $HCO_3^-$ -Konzentration (Carbonathärtesenkung).

Zur Kompensierung der Verluste an $Ca(HCO_3)_2$ bzw. dessen Erhöhung sind folgende Maßnahmen bekannt:

a) Zusatz von Lösungen, die neben $Ca(HCO_3)_2$ noch viel freies $CO_2$ enthalten. Diese Maßnahme ist mit den oben geschilderten Nachteilen behaftet. Ein weiterer Nachteil liegt in der Umständlichkeit des Verfahrens, da die Ca $(HCO_3)_2$-Lösungen durch Auflösung von $CaCO_3$ oder $Ca(OH)_2$ in $CO_2$-angereichertem Wasser mühsam hergestellt werden müssen. Durch Zusatz von $Mg(OH)_2$ bzw. $MgCO_3 \cdot Mg(OH)2$ läßt sich auch eine Lösung herstellen, die zusätzlich $Mg(HCO_3)_2$ enthält.

b) Zusatz von festem Gemischen, die äquivalente Mengen an $NaHCO_3$ und löslichen Ca, Mg-Salzen (meist Chloride) enthalten. Durch Auflösen dieser Gemische in Hälterungswasser werden die Ionen $Ca^{2+} + 2Cl^- + 2Na^+ + 2HCO_3^-$ eingebracht. Neben dem erwünschten $[Ca^{2+} + 2HCO_3^-]$ enthält jetzt das Wasser auch die äquivalente Menge an NaCl (oder auch $Na_2SO_4$), die unerwünscht ist. Der Nachteil dieses Verfahrens besteht in der Einbringung von Fremdsalzen, z. B. NaCl oder $Na_2SO_4$.

Schließlich verändert auch ein Verbrauch von gelöstem Kohlendioxid die Wasserqualität.

Algen, Wasserpflanzen und autotrophe Mikroorganismen vebrauchen ständig gelöstes Kohlendioxid. Neben dem dadurch erhöhten pH-Wert entsteht eine $CO_2$-Mangelsituation, die sich nachteilig auf chemische und biologische Vorgänge auswirkt.

Zum Ausgleich des $CO_2$-Mangels sind folgende $CO_2$-Zusatzmaßnahmen bekannt:

a) Zufuhr von $CO_2$-Gas aus $CO_2$-Druckflaschen. Problematisch bei dieser Methode sind:

- die schwer einstellbare und kontrollierbare Dosierung,
- der Preis,
- Sicherheitsrisiken, die mit dem Druckgas-System verbunden sind.

b) $CO_2$-Erzeugung durch anodische Oxidation einer Graphitelektrode. Das System beinhaltet folgende Nachteile:

- schlechte Dosierbarkeit,
- $CO_2$-Peaks durch sekundäre chemische Prozesse an der Kathode, verbunden mit starker Entkalkung,
- Entstehen von Knallgas,
- Bildung von Chlor in chloridreicheren Wässern.

c) Erzeugung von $CO_2$ in externen Gärungsreaktoren. Auch hier bestehen gravierende, systembedingte Nachteile, z.B.:

- Starke Temperaturabhängigkeit des Fermentations-/Gärungsprozesses,
- schwer beherrschbarer Prozess,
- sehr schlechte Dosiermöglichkeit und Dosierkonstanz.

Die verschiedenen aufgezeigten Probleme erscheinen zunächst heterogen und nicht mit einem Prinzip lösbar.

Überraschend existiert jedoch für alle Teilprobleme eine gemeinsame Lösung, die folgende chemische und mikrobiologische Prinzipien umfaßt:

- Nutzung der mikrobiologischen Aktivität der Wässer und insbesondere der Filtersysteme in den Hälterungssystemen, die aerobe und anaerobe Prozesse beinhaltet.
- Verwendung von Komponenten, Produkten und Zubereitungen, die z. T. oder vollständig biologisch abbaubar sind.
- Verknüpfung von mikrobiologischen und chemischen Prozessen im Hälterungssystem.
- Verwendung von Komponenten, Produkten und Zubereitungen, die nur die gewünschte Funktion erfüllen, aber keine unerwünschten Zusatzstoffe einbringen oder kumulieren lassen.
- Verwendung von Komponenten, Produkten und Zubereitungen, die völlig sicher für Fische und andere Wasserorganismen sind.
- Alle Produkte und Methoden verhalten sich ökologisch neutral und führen nicht zu sekundären Verschlechterungen der Wasserqualität.
- Alle geforderten Funktionen werden allein von sehr einfach zu handhabenden und zu dosierenden Wasserzusätzen ermöglicht.

Aus der DE 197 04 953 A ist ein Zweikomponentenmittel bekannt, bestehend aus einem biotoleranten Flockungsmittel, enthaltend polymere Aluminiumsalze und mehrbasische organische Säuren, und einem Wirkstoffgemisch als Co-Flockungsmittel.

Die EP 0 882 675 A beschreibt Zusatzmittel, die in Abwasserreinigungsanlagen eingesetzt werden zur Verbesserung der Denitrifizierung bei gleichzeitiger Dephosphatierung des Abwassers.

Gegenstand der Erfindung ist somit ein Verfahren zur Verbesserung der Wasserqualität von biologischen

Hälterungssystemen gemäß Anspruch 1.

Gegenstand der Erfindung ist ferner ein Mehrkomponentenprodukt zur Verbesserung der Wasserqualität biologischer Hälterungssysteme gemäβ Anspruch 14.

Die konsequente Nutzung und Verknüpfung der Hälterungssysteme als mikrobiologische und chemische Reaktoren zur Erzielung der gewünschten Wasserverbesserungen aus einfachen, zugesetzten Vorstufen ist neuartig und auch für den Fachmann nicht offensichtlich und bringt aufgrund der Einfachheit, der kontrollierbaren und beherrschbaren Prozesse und der völligen Abwesenheit von potentiell schädigenden Nebeneffekten und - wirkungen gegenüber den Lösungen nach dem Stand der Technik erhebliche und innovative Vorteile. Ein besonderer Vorteil der Erfindung ist auch darin zu sehen, daß sie eine getrennte oder gemeinsame Lösung der geschilderten Teilprobleme ermöglicht.

Im folgenden werden die erfindungsgemäßen Detaillösungen beschrieben:

A) Senkung der Phosphatkonzentrationen

Dies erfolgt vornehmlich mit Salzen von $Al^{3+}$, $Fe^{3+}$ und $TiO^{2+}$ bzw. $ZrO^{2+}$ mit organischen Carbonsäuren, z. B. mit deren Acetaten, Formiaten, Tartraten und insbesondere Citraten.

Auch Gemische der Salze organischer Säuren mit den zugrundeliegenden organischen Säuren oder anderen organischen Säuren sind mit gleichem Erfolg einsetzbar, z.B.

Aluminiumcitrat plus Citronensäure,

Eisen(III)citrat plus Citronensäure,

Eisen(III)citrat plus Weinsäure.

Ferner ist es auch möglich, schwerlösliche Salze der genannten Metalle mit organischen Säuren in fester Form (Pulver, Granulat, Tabletten) als Depot-Phosphateliminierer dem Filtersystem oder allgemein dem Hälterungssystem zuzusetzen.

Das Prinzip wird im folgenden für $Al^{3+}$- und $Fe^{3+}$-Salze dargestellt, gilt aber entsprechend auch für $TiO^{2+}$- und $ZrO^{2+}$-Salze. Werden dem Hälterungswasser $Al^{3+}$ und/oder $Fe^{3+}$-Salze von Carbonsäuren zugesetzt, so wird zunächst keine Flockung und Trübung beobachtet. Erst beim aeroben biologischen Abbau im Filtersystem nach

$$\begin{array}{ccc} \text{Aluminiumcitrat} & & (Al^{3+}) + 3HCO_3^- \\ & \xrightarrow{\text{aerober Abbau}} & \\ \text{Eisen(III)citrat} & & (Fe^{3+}) + CO_2 \end{array}$$

Bei der sich direkt anschließenden Bildung von $Al(OH)_3$ oder $Fe(OH)_3$ gemäß

$$\begin{array}{ccccc} Fe^{3+} & & & (Fe(OH)_3) & \\ & + 3HCO_3^- & \longrightarrow & & + 3CO_2 \\ Al^{3+} & & & (Al(OH)_3) & \end{array}$$

wird Phosphat angelagert und zusammen mit den Hydroxiden ausgefällt.

Die ausgefallenen Metallhydroxide mit coflokkuliertem Phosphat sammeln sich im Filterschlamm an und werden bei der regelmäßigen Filterreinigung eliminiert.

Durch regelmäßigen Zusatz der organischen Metallsalze, z. B. als wäßrige Lösung, zu dem Hälterungswasser läßt sich der Phosphatanstieg völlig verhindern.

Im Gegensatz zur Phosphatfällung mit anorganischen $Al^{3+}$- oder $Fe^{3+}$-Salzen beinhaltet die erfindungsgemäße Phosphat-Fällung gravierende und überraschende Vorteile:

- Es entsteht keine Trübung und Flockenbildung im Wasser,
- der Prozess läuft weitgehend im biologisch aktiven Filtersystem ab,
- die organischen Metallsalze verhalten sich

toxikologisch neutral,
ökologisch neutral,
carbonathärteneutral.

- Es werden keine sich anreichernden Fremdionen zugesetzt.
- Es wird durch aeroben Abbau der Carbonsäureanionen lediglich $CO_2$ erzeugt, welches den $CO_2$-Gehalt positiv beeinflußt bzw, den $CO_2$- Verbrauch z. T. ausgleicht.

Die sich einstellenden Phosphat-Konzentrationen sind für jedes Metall typisch:

Für Fe Citrat: ca. 0,0 - 0.2 mg/l,

für Al Citrat: ca. 0,0 - 0,5 mg/l,

Sehr gute Phosphat-Eliminierungserfolge werden erreicht, wenn dem Hälterungswasser wöchentlich bis zweiwöchentlich 1 mg/l bis 100 mg/l, vorzugsweise 10 mg/l bis 40 mg/l Aluminiumcitrat, Eisencitrat oder deren Gemische zugesetzt werden. Die phosphat-eliminierende Wirkung ist von der eingebrachten Menge an Metallkation abhängig.

B) Senkung der Nitratkonzentration bzw. Begrenzung des $NO_3$-Anstiegs durch N-freie, lösliche organische Verbindungen

Werden dem Hälterungswasser regelmäßig N-freie, organische, abbaubare Substanzen zugesetzt, wird auch ohne das Vorhandensein von Anaerobreaktoren der Anstieg der Nitratkonzentration verlangsamt bzw. begrenzt und eine Nitratkonzentration erreicht, die sich auf einem mittleren Niveau einpendelt. Ohne Behandlung mit diesen erfindungsgemäßen Wasserzusätzen steigt der Nitratgehalt monoton und unbegrenzt immer weiter an. Da der Grund für den verhinderten oder gebremsten Nitratanstieg in einer partiellen Denitrifikation in anaeroben Mikrobereichen im Filter liegt, wird parallel zur Verlangsamung, Limitierung des Nitratanstieges auch der nitrifikationsbedingte Verlust an Carbonathärte ($HCO_3^-$-Konzentration) gehemmt oder limitiert.

Als nitratreduzierende, wasserlösliche Verbindungen lassen sich im Prinzip alle biologisch abbaubaren organischen Verbindungen einsetzen, vorzugsweise aber aliphatische Verbindungen wie beispielsweise Alkohole, z. B. Glycerin, Sorbit, Ethanol, Zucker, z. B. Pentosen, Hexosen, Saccharose, Carbonsäuren, z.B. Essigsäure, Citronensäure, Milchsäure und Weinsäure. Sehr bewährt haben sich auch Kombinationen zu je gleichen Mengenanteilen von Citronensäure und Saccharose oder Essigsäure und Saccharose.

Setzt man dem Hälterungswasser dreimal wöchentlich bzw. alle zwei Tage 5 - 100 mg/l, vorzugsweise 5 - 40 mg/l der genannten Verbindungen oder Gemische zu, so wird der Nitratanstieg verlangsamt und in Relation zur gewählten Dosierung bestimmte Nitrat-Höchstkonzentrationen nicht mehr überschritten.

Dosierungsbeispiele für die Kombination Citronensäure/Saccharose sind:

a) 3 Dosierungen pro Woche mit 10 mg/l [Citronensäure plus Saccharose (1:1)]: Nitratgrenzkonzentration: 60 - 80 mg/l

b) 3 Dosierungen pro Woche mit 20 mg/l [Citronensäure plus Saccharose (1:1)]: Nitratgrenzkonzentration: 40 mg/l

Bei höheren Dosierungen, z. B. 60 - 100 mg/l dreimal wöchentlich oder häufigeren niedrigen Dosierungen, z. B. täglich 10 mg/l läßt sich die Nitratgrenzkonzentration noch weiter absenken, z. B. bis auf 5 - 10 mg/l $NO_3^-$.

Parallel zur $NO_3^-$-Stabilisierung wird auch eine Stabilisierung der Carbonathärte bei Minimalwerten erreicht, unter die die Carbonathärte nicht weiter absinkt.

Die zugesetzten Verbindungen werden vollständig zu $H_2O$ und $CO_2$ abgebaut. Das gebildete $CO_2$ wird von Pflanzen, Algen und nitrifizierenden Bakterien als C-Quelle genutzt.

Durch Einbringen einer Belüftung läßt sich die $CO_2^-$ Konzentration nach Bedarf nach unten korrigieren.

C) Erhöhung der Carbonathärte bzw. der $HCO_3^-$-Konzentration

Bei der vorliegenden erfindungsgemäßen Lösung bedient man sich des folgenden mikrobiologischen/chemischen Prinzips unter Verwendung von $Na^+$-, $Ca^{2+}$-, $Mg^{2+}$- und $Sr^{2+}$-Salzen der Essigsäure, Milchsäure, Citronensäure, Weinsäure, Ameisensäure, Propionsäure Äpfelsäure.

Werden Carbonsäuren, z. B. Essigsäure, mikrobiologisch abgebaut, entsteht lediglich $H_2O$ und $CO_2$:

$$CH_3COOH \xrightarrow{O_2,\ Abbau} 2CO_2 + 2H_2O$$

Setzt man dagegen Salze der Carbonsäuren dem mikrobiologischen Abbau aus, so wird neben $CO_2$ entsprechend der Anzahl der eingebrachten negativen Ladungen der Anionen auch Hydrogencarbonat gebildet.

$$CH_3COO- \xrightarrow{O_2,\ Abbau} CO_2 + 1{,}5\ H_2O + HCO_3^-$$

Durch die Einbringung von Salzen von Carbonsäuren in das Hälterungswasser werden nach biologischem Abbau die Hydrogencarbonate gebildet.

Dies mag am Beispiel für Natriumhydrogencarbonat aus organischen Natriumsalzen, z. B. Na-Acetat, Na-Citrat, noch nicht sehr spektakulär wirken, da $NaHCO_3$ selbst leicht zugänglich ist. Aber selbst hier besteht bei flüssigen Zubereitungen der große Vorteil der meist - im Vergleich zu $NaHCO_3$ - sehr hohen Löslichkeit, beispielsweise Na-Acetat, die hohe Produktkonzentrationen und Reichweiten zulassen.

Ein weiterer Vorteil der Verwendung organischer Na-Salze anstelle von $NaHCO_3$ oder $Na_2CO_3$ besteht in der pH-neutralen Anwendung:

- Das Na-Salz organischer Carbonsäuren wirkt pH-neutral, läßt sich mit überschüssiger(n) Carbonsäure(n) sogar sauer im Produkt einstellen. Dies ist naturgemäß mit $NaHCO_3$ oder $Na_2CO_3$ nicht möglich.
- Beim biologischen Abbau entsteht (außer bei Formiaten) immer noch $CO_2$, welches ebenfalls einer pH-Erhöhung entgegenwirkt.

Noch besser erkennbar werden die Vorteile der erfindungsgemäßen Problemlösung, wenn man die Einbringung der Hydrogencarbonate der Erdalkalien $Mg^{2+}$, $Ca^{2+}$, $Sr^{2+}$ betrachtet, die bekanntlich als Substanzen nicht zur Verfügung stehen. Durch Zusatz der löslichen $Mg^{2+}$, $Ca^{2+}$, $Sr^{2+}$-Salze organischer Carbonsäuren lassen sich im Hälterungswasser problemlos die gewünschten Konzentrationen der Hydrogencarbonate aufbauen.

Beispiel: (Acetate)

$$M^{2+}(OAc)_2 \xrightarrow{O_2,\ Abbau} M^{2+}(HCO_3)_2 + 2CO_2 + 3H_2O$$

$$M^{2+} = Mg^{2+},\ Ca^{2+},\ Sr^{2+}$$

Die Dosierungen orientieren sich an der gewünschten Einstellung oder Erhöhung der Carbonathärte bzw. der $HCO_3^-$-Konzentration. 1 mMol/l Na-Salz organischer Carbonsäuren erhöht die Carbonathärte um 2,8 °dH, 1 mMol/l $Mg^{2+}$, $Ca^{2+}$, $Sr^{2+}$-Salze organischer Carbonsäuren erhöht die Carbonathärte um 5,6 °dH.

Die Alkali- oder Erdalkalimetallsalze der organischen Carbonsäuren lassen sich in fester Form (Pulver, Granulat, Tabletten) oder in Form einer wäßrigen Lösung dem Hälterungswasser zusetzen.

Als Carbonsäuren bieten sich an:

a) Für $Na^+$-Salze:

Insbeondere Essigsäure, Milchsäure, Citronensäure, Weinsäure und dergleichen.

b) Für $Mg^{2+}$-Salze:

Insbeondere Essigsäure, Milchsäure, Citronensäure, Weinsäure.

c) Für $Ca^{2+}$-Salze:

Insbesondere Ameisensäure, Essigsäure, Propionsäure, Milchsäure, Äpfelsäure.

d) Für $Sr^{2+}$-Salze:

Insbesondere Ameisensäure, Essigsäure, Propionsäure, Milchsäure, Äpfelsäure.

D) Erhöhung der Gesamthärte bzw. der Konzentration an $Ca^{2+}$-und $Mg^{2+}$-Hydrogencarbonaten

Das Prinzip dieser erfindungsgemäßen Problemlösung und alle wichtigen Anwendungsdetails wurden unter C) beschrieben. Die Vorteile der Methode und der Zubereitungen sind:

- Sehr einfache und sichere, definierte Einstellung und Erhöhung der Gesamthärte,
- problemlose Herstellung und Anwendung von Produktzubereitungen, insbesondere flüssiger Lösungen,
- keine Einbringung unerwünschter Fremdionen,
- leichte Einstellung aller gewünschter Mg:Ca-Verhältnisse von $\infty$:1 bis 1: $\infty$.
- Es werden nur kontrollierte Mengen an $CO_2$ erzeugt, die Pflanzen, Algen und autotrophen Mikroorganismen zur C-Versorgung dienen.
- Neben den hier beschriebenen, aus organischen Salzen gebildeten $Mg^{2+}$ und $Ca^{2+}$-Hydrogencarbonaten lassen sich auch $Mg^{2+}$-, $Ca^{2+}$-Chloride oder Sulfate in Kombination zusetzen, so daß sich jede mögliche oder geforderte chemische Zusammensetzung der Gesamthärte realisieren läßt.

E) Erhöhung der $CO_2$-Konzentration

In den vorhergehenden Problemlösungen A) bis D) wurde bereits beschrieben, daß beim biologischen Abbau organischer Verbindungen im Hälterungssystem $CO_2$ gebildet wird. Dies läßt sich zu einem internen, mikrobiologisch arbeitenden $CO_2$-Zufuhrsystem ausbauen. Eine ständige und ausreichende, aber noch nicht organismenschädigende Zufuhr von $CO_2$ zum Hälterungswasser erfüllt verschiedene wichtige Funktionen:

- Kohlenstoffdüngung der pflanzlichen Organismen,
- Kohlenstoffversorgung der autotrophen Mikroorganismen, insbesondere der Nitrifikanten,
- Verhinderung des durch $CO_2$-Verbrauch verursachten pH-Anstiegs,
- Einstellung eines definierten pH-Wertes durch Einstellung des $HCO_3^-/CO_2$-Säure-Base-Gleichgewichts,
- Eingriff in das Kalk/$CO_2$-Gleichgewicht und Verhinderung der chemischen und biologischen Kalkausfällung.

Es hat sich gezeigt, daß $CO_2$-Konzentrationen zwischen 1 und 25 mg/l, vorzugsweise 5 - 15 mg/l im optimalen Bereich liegen. Potentielle $CO_2$-Schädigungen von Fischen und anderen Wasserorganismen treten hier noch nicht auf. Da $CO_2$ ständig im Hälterungssystem verbraucht wird und Verluste an die Atmosphäre auftreten, muß $CO_2$ in der richtigen Menge dem Hälterungswasser zudosiert werden.

Dies läßt sich sehr leicht durch eine tägliche oder alle zwei Tage durchzuführende Zudosierung von biologisch abbaubaren organischen Verbindungen, z. B. von aliphatischen organischen Carbonsäuren, Alkoholen und Zuckern erreichen. Besonders bewährt haben sich folgende Verbindungen:

a) Carbonsäuren: Ameisensäure, Oxalsäure, Essigsäure, Milchsäure, Citronensäure, Äpfelsäure, Weinsäure,
b) Alkohole: Ethanol, Glycerin, Sorbit,
c) Zucker: Pentosen, Hexosen, Saccharose.

Dosiert man die Carbonsäuren allein, so wird in einer chemischen Reaktion aus dem Hydrogencarbonat-Vorrat

sofort die äquivalente $CO_2$-Menge freigesetzt:

$$HCO_3^- + CH_3COOH \rightarrow CO_2 + H_2O + CH_3COO^-$$

Bei dem sich anschließenden biologischen Abbau des Carbonsäure-anions wird langsam (innerhalb weniger Stunden bis zu 24 Stunden) das verbrauchte Hydrogencarbonat wieder erzeugt und weiteres $CO_2$ gebildet:

$$CH_3COO^- \rightarrow HCO_3^- + CO_2 + 1,5H_2O$$

Carbonsäuren erzeugen demnach $CO_2$ in einem Stufenprozess:

a) In einer Sekundenreaktion durch Protonierung von $HCO_3^-$,

b) in einer wenige Stunden bis zu 24 Stunden dauernden Reaktion durch oxidativen biologischen Abbau.

Dem Hälterungssystem zugesetzte Alkohole und Zucker werden ausschließlich durch die relativ langsame mikrobiologische Reaktion zu $H_2O$ und $CO_2$ abgebaut.

Durch Wahl von Kombinationen verschiedener C-Quellen mit unterschiedlicher Geschwindigkeit der $CO_2$-Freisetzung läßt sich eine sehr gleichmäßige $CO_2$-Einbringung erreichen, z. B. durch die Kombination aus Citronensäure und Saccharose oder Essigsäure und Saccharose. Die Einzelverbindungen oder Kombinationen werden wie folgt dosiert: Täglich 1 - 20 mg/l, vorzugsweise 3 - 10 mg/l oder auch alle 2 Tage 2 - 40 mg/l, vorzugsweise 6 - 20 mg/l.

Die erfindungsgemäßen Wasserverbesserungsmittel lassen sich für den im einzelnen definierten funktionalen Verwendungszweck in allen biologischen Hälterungssystemen einsetzen, wie z. B.

- Aquarien (Warmwasser, Kaltwasser, Süßwasser, Salzwasser),
- Gartenteiche, Koi-Teiche,
- Aquaterrarien,
- Großaquarien (Zoos, öffentliche Aquarien).

Das erfindungsgemäße Mittel wird in Form von Mehrkomponentenprodukten, z.B. als Packung für 100 bis 1000 l Hälterungssystem, vorzugsweise als wäßriges Konzentrat bereitgestellt. Hierbei können die einzelnen Komponenten 1.) bis 4.) in dem Konzentrat in den den zuvor genannten Dosierungsempfehlungen entsprechenden Mengen vereinigt sein. Die einzelnen Komponenten können aber auch einzeln oder in verträglicher Mischung in der der Dosiermenge entsprechenden Einzeldosis oder in größeren Menge in fester Form z.B. als Pulver, Granulate, Extrudate, Perlen, Kapseln oder in Tabletten oder flüssiger Form abgepackt sein. In dieser Form können dann die einzelnen Teilprobleme einzeln oder in beliebiger Kombination durch Zusatz einzelner Komponenten oder -mischungen gelöst werden. Genaue Angaben über die Dosierung der Konzentrate Einzelkomponenten oder Mischungen finden sich auf der Verpackung oder dem Beipackzettel.

Die Dosierfrequenz ergibt sich aus der funktionalen Verwendung. Sie reicht von täglich über alle zwei Tage und einmal oder zweimal pro Woche bis zu einmal pro zwei Wochen, oder nach Bedarf.

Zusatzbehandlungen bei der Anwendung der erfindungsgemäßen Produkte:

Da bei den beschriebenen meist oxidativen Abbauprozessen die zum vollständigen Abbau erforderliche Menge an Sauerstoff verbraucht wird, wird zweckmäßigerweise neben dem Einsatz des erfindungsgemäßen Wasserbehandlungsmittels eine Zusatzbehandlung durchgeführt. So kann es, - da der Sauerstoff des mit der Atmosphäre im Gleichgewicht stehenden Hälterungswassers auf ca. 8 - 10 mg/l (15 - 25 °C) beschränkt ist - erforderlich werden, während der Wasserbehandlung Sauerstoff zuzuführen, um nicht eine $O_2$-Mangelsituation zu verursachen.

Durch permanente milde feinblasige Belüftung oder Zusatz einer zum $O_2$-Bedarf äquivalenten Menge an Wasserstoffperoxid wird die beschriebene Wasserbehandlung auch sauerstoffneutral und damit umweltneutral.

## Patentansprüche

1. Verfahren zur Verbesserung der Wasserqualität von biologischen Hälterungssystemen, **dadurch gekennzeichnet, dass** man dem Hälterungssystem

   a) zur Senkung der Phosphatkonzentration ein $Al^{3+}$-, $Fe^{3+}$-, $TiO^{2+}$-, und/oder $ZrO^{2+}$- acetat, -formiat, -tartrat und/oder -citrat;
   b) zur Senkung der Nitratkonzentration bzw. Begrenzung des Nitratanstiegs mindestens eine wasserlösliche,

N-freie und biologisch abbaubare organische Verbindung;
c) zur Erhöhung der Carbonathärte bzw. der $HCO_3^-$ -Konzentration ein $Na^+$-$Ca^{2+}$-, $Mg^{2+}$-, oder $Sr^{2+}$-Salz der Citronen-, Essig-, Milch-, Wein-, Ameisen-, Propion- oder Äpfelsäure,
d) zur Erhöhung der Gesamthärte bzw. der Konzentration an $Ca^{2+}$- und $Mg^{2+}$-hydrogencarbonaten ein Gemisch aus $Ca^{2+}$- und $Mg^{2+}$-Salzen organischer Carbonsäuren ausgewählt aus $Ca^{2+}$-Salzen der Ameisensäure, Essigsäure, Propionsäure, Milchsäure und Äpfelsäure und aus $Mg^{2+}$-Salzen der Essigsäure, Milchsäure, Citronensäure und Weinsäure gegebenenfalls in Mischung mit $Ca^{2+}$- und $Mg^{2+}$-chloriden und/oder -sulfaten, und
e) zur Erhöhung der $CO_2$-Konzentration mindestens eine biologisch abbaubare Verbindung

in Kombination zusetzt.

2. Verfahren nach Anspruch 1, **dadurch gekennzeichnet, dass** man die Kombination in Form eines wässrigen Konzentrats zusetzt.

3. Verfahren nach einem der Ansprüche 1 bis 2, **dadurch gekennzeichnet, dass** man wöchentlich bis zweiwöchentlich 1 bis 100, vorzugsweise 10 bis 40 mg/l Aluminium- und/oder Eisen(III)-citrat zusetzt.

4. Verfahren nach Anspruch 1 bis 2, **dadurch gekennzeichnet, dass** man zur Senkung der Nitratkonzentration bzw. Begrenzung des Nitratanstiegs als biologisch abbaubare organische Verbindung eine aliphatische Verbindung z.B. einen Alkohol, einen Zucker oder eine Carbonsäure zusetzt.

5. Verfahren nach Anspruch 4, **dadurch gekennzeichnet, dass** man Glycerin, Sorbit oder Ethanol, eine Pentose, eine Hexose oder Saccharose, oder Essig-, Citronen-, Wein- oder Milchsäure zusetzt.

6. Verfahren nach Anspruch 4 oder 5, **dadurch gekennzeichnet, dass** man ein Gemisch aus Citronen- oder Essigsäure und Saccharose oder insbesondere ein Gemisch aus Citronensäure, Weinsäure und Saccharose zusetzt.

7. Verfahren nach einem der Ansprüche 4 bis 6, **dadurch gekennzeichnet, dass** man jeden zweiten Tag oder dreimal wöchentlich 15 bis 100, vorzugsweise 5 bis 40 mg/l an der Verbindung bzw. dem Gemisch zusetzt.

8. Verfahren nach Anspruch 1, **dadurch gekennzeichnet, dass** man zur beliebigen Steuerung der Zusammensetzung der Gesamthärte des weiteren $Ca^{2+}$-und $Mg^{2+}$- chloride und/oder -sulfate zusetzt.

9. Verfahren nach Anspruch 1 bis 2, **dadurch gekennzeichnet, dass** man zur Erhöhung der $CO_2$-Konzentration täglich oder alle zwei Tage eine Carbonsäure und/oder einen Alkohol und/oder einen Zucker zusetzt.

10. Verfahren nach Anspruch 9, **dadurch gekennzeichnet, dass** man Glycerin, Sorbit oder Ethanol, eine Pentose, eine Hexose oder Saccharose, oder Essig-, Citronen- oder Milchsäure zusetzt.

11. Verfahren nach einem der Ansprüche 9 und 10, **dadurch gekennzeichnet, dass** man täglich 1 bis 20, vorzugsweise 3 bis 10 mg/l bzw. alle zwei Tage 2 bis 40, vorzugsweise 6 bis 20 mg/l an der biologisch abbaubaren Verbindung oder einer Mischung solcher Verbindungen zusetzt.

12. Verfahren nach Anspruch 1 bis 2, **dadurch gekennzeichnet, dass** man zusätzlich eine dem $O_2$-Bedarf des Hälterungssystems äquivalente Menge Sauerstoff oder Wasserstoffperoxid zuführt.

13. Verfahren nach Anspruch 1 bis 12 **gekennzeichnet durch** eine Dosiersequenz von täglich, alle zwei Tage, einmal oder zweimal pro Woche bis einmal pro zwei Wochen oder nach Bedarf.

14. Mehrkomponentenprodukt zur Verbesserung der Wasserqualität von biologischen Hälterungssystemen, **gekennzeichnet durch** einen Gehalt an

a) mindestens einem leicht- oder schwerlöslichen $Al^{3+}$-, $Fe^{3+}$-, $TiO^{2+}$-, oder $ZrO^{2+}$-acetat, -formiat, -tartrat und/oder insbesondere -citrat;
b) mindestens einer wasserlöslichen N-freien, biologisch abbaubaren organischen Verbindung;
c) mindestens ein $Na^+$- $Ca^{2+}$-, $Mg^{2+}$-, oder $Sr^{2+}$-Salz der Citronen-, Essig-, Milch-, Wein-, Ameisen-, Propion- oder Äpfelsäure, und
d) ein Gemisch aus $Ca^{2+}$- und $Mg^{2+}$-Salzen organischer Carbonsäuren ausgewählt aus $Ca^{2+}$-Salzen der Amei-

sensäure, Essigsäure, Propionsäure, Milchsäure und Äpfelsäure und aus $Mg^{2+}$-Salzen der Essigsäure, Milchsäure, Citronensäure und Weinsäure gegebenenfalls in Mischung mit $Ca^{2+}$- und $Mg^{2+}$-chloriden und/oder -sulfaten

in Kombination.

**15.** Mehrkomponentenprodukt nach Anspruch 14, enthaltend

a) ein $Al^{3+}$-, $Fe^{3+}$-, $TiO^{2+}$-, und/oder $ZrO^{2+}$-formiat, -tartrat und/oder insbesondere -citrat;
b) Glycerin, Sorbit oder Ethanol, eine Pentose, eine Hexose oder Saccharose, oder Essig-, Citronen-, Wein- oder Milchsäure;
c) ein $Na^{+}$- $Ca^{2+}$-, $Mg^{2+}$-, oder $Sr^{2+}$-Salz der Citronen-, Essig-, Milch-, Wein-, Ameisen-, Propion- oder Äpfelsäure; und
d) ein Gemisch aus $Ca^{2+}$- und $Mg^{2+}$-Salzen organischer Carbonsäuren ausgewählt aus $Ca^{2+}$-Salzen der Ameisensäure, Essigsäure, Propionsäure, Milchsäure und Äpfelsäure und aus $Mg^{2+}$-Salzen der Essigsäure, Milchsäure, Citronensäure und Weinsäure gegebenenfalls in Mischung mit $Ca^{2+}$- und $Mg^{2+}$-chloriden und/oder -sulfaten

in Kombination.

**16.** Mehrkomponentenprodukt gemäß Anspruch 14 oder 15, enthaltend die entsprechenden Komponenten in fester Form.

**17.** Mehrkomponentenprodukt gemäß Anspruch 14 oder 15, enthaltend die entsprechenden Komponenten in Form eines Konzentrats.

**18.** Mehrkomponentenprodukt gemäß Anspruch 16, wobei die feste Form aus einem Pulver, Granulat oder Extrudat, oder aus Pellets, Kapseln oder Tabletten besteht.

**Claims**

**1.** Method for the improvement of the water quality of biological maintenance systems, **characterized in that** one adds to the maintenance system

a) for the lowering of the phosphate concentration, an $Al^{3+}$-, $Fe^{3+}$-, $TiO^{2+}$-, and/or $ZrO^{2+}$-acetate, -formate, -tartrate and/or -citrate;
b) for the lowering of the nitrate concentration or limitation of the nitrate increase, at least one water-soluble N-free and biologically decomposable organic compound;
c) for the increasing of the carbonate hardness or of the $HCO_3^-$ concentration, an $Na^{+}$-, $Ca^{2+}$, $Mg^{2+}$- or $Sr^{2+}$-salt of the citric acid, acetic acid, lactic acid, tartaric acid, formic acid, propionic acid or malic acid;
d) for the increasing of the total hardness or of the concentration of $Ca^{2+}$-and $Mg^{2+}$-hydrogen carbonates, a mixture of $Ca^{2+}$- and $Mg^{2+}$-salts of organic carboxylic acids selected from $Ca^{2+}$-salts of the formic acid, acetic acid, propionic acid, lactic acid and malic acid and from $Mg^{2+}$-salts of the acetic acid, lactic acid, citric acid and tartaric acid, preferably in mixture with $Ca^{2+}$-and $Mg^{2+}$-chlorides and/or sulphates, and,
e) for the increasing of the $CO_2$ concentration, at least one biologically decomposable compound.

**2.** Method according to claim 1, **characterized in that** one adds the combination in form of an aqueous concentrate.

**3.** Method according to any one of claims 1 to 2, **characterized in that** one adds weekly to every two weeks 1 to 100, preferably 10 to 40 mg/l aluminium and/or iron (III) citrate.

**4.** Method according to any of claims 1 to 2, **characterized in that** one adds for the lowering of the nitrate concentration or limiting of the nitrate increase, an aliphatic compound, e.g. an alcohol, a sugar or a carboxylic acid as a biologically decomposable organic compound.

**5.** Method according to claim 4, **characterized in that** one adds glycerol, sorbitol or ethanol, a pentose, a hexose or saccharose, or acetic, citric, tartaric or lactic acid.

**6.** Method according to claim 4 or 5, **characterized in that** one adds a mixture of citric or acetic acid and saccharose, or in particular a mixture of citric acid, tartaric acid and saccharose.

**7.** Method according to any of claims 4 to 6, **characterized in that** one adds every second day or three times weekly 15 to 100, preferably 5 to 40 mg/l of the compound or of the mixture.

**8.** Method according to claim 1, **characterized in that** one further adds $Ca^{2+}$- and $Mg^{2+}$-chlorides and/or -sulphates for the desired composition of the total hardness.

**9.** Method according to claim 1 or 2, **characterized in that** one adds daily or every two days a carboxylic acid and/or an alcohol and/or a sugar for the increasing of the $CO_2$ concentration.

**10.** Method according to claim 9, **characterized in that** one adds glycerol, sorbitol or ethanol, a pentose, a hexose or saccharose, or acetic acid, citric acid or lactic acid.

**11.** Method according to any of claims 9 and 10, **characterized in that** one adds daily 1 to 20, preferably 3 to 10 mg/l, or every two days 2 to 40, preferably 6 to 20 mg/l of the biologically decomposable compound or a mixture of such compounds.

**12.** Method according to claim 1 or 2, **characterized in that** one additionally introduces an amount of oxygen or hydrogen peroxide equivalent to the $O_2$ requirement of the maintenance system.

**13.** Method according to any of claims 1 to 12, **characterized by** a dosage sequence of daily, every second day, once or twice a week up to once every second week or according to needs.

**14.** Multiple component product for the improvement of the water quality of biological maintenance systems, **characterized by** a content of

a) at least one easily or sparingly soluble $Al^{3+}$-, $Fe^{3+}$-, $TiO^{2+}$-, or $ZrO^{2+}$-acetate,

- formate, -tartrate and/or in particular -citrate;

b) at least one water-soluble, N-free biologically decomposable organic compound;
c) at least one $Na^{+}$-, $Ca^{2+}$, $Mg^{2+}$- or $Sr^{2+}$-salt of the citric acid, acetic acid, lactic acid, tartaric acid, formic acid, propionic acid or malic acid; and
d) a mixture of $Ca^{2+}$- and $Mg^{2+}$-salts of organic carboxylic acids selected from $Ca^{2+}$-salts of the formic acid, acetic acid, propionic acid, lactic acid and malic acid, and from $Mg^{2+}$-salts of the acetic acid, lactic acid, citric acid and tartaric acid, preferably in mixture with $Ca^{2+}$- and $Mg^{2+}$-chlorides and/or -sulphates

in combination.

**15.** Multiple component product according to claim 14, comprising

a) an $Al^{3+}$-, $Fe^{3+}$-, $TiO^{2+}$-, and/or $ZrO^{2+}$-formate, -tartrate and/or in particular -citrate.
b) glycerol, sorbitol or ethanol, a pentose, a hexose or saccharose, or acetic acid, citric acid, tartaric acid or lactic acid;
c) an $Na^{+}$-, $Ca^{2+}$, $Mg^{2+}$- or $Sr^{2+}$-salt of the citric acid, acetic acid, lactic acid, tartaric acid, formic acid, propionic acid or malic acid; and
d) a mixture of $Ca^{2+}$- and $Mg^{2+}$-salts of organic carboxylic acids selected from $Ca^{2+}$-salts of the formic acid, acetic acid, propionic acid, lactic acid and malic acid, and from $Mg^{2+}$-salts of the acetic acid, lactic acid, citric acid and tartaric acid, preferably in mixture with $Ca^{2+}$- and $Mg^{2+}$-chlorides and/or -sulphates

in combination.

**16.** Multiple component product according to claim 14 or 15, comprising the respective components in solid form.

**17.** Multiple component product according to claim 14 or 15, comprising the respective components in the form of a concentrate.

**18.** Multiple component product according to claim 16, wherein the solid form consist of a powder, granulate or extrudate, or of pellets, capsules or tablets.

## Revendications

**1.** Procédé d'amélioration de la qualité de l'eau de systèmes de réservoirs biologiques, **caractérisé en ce que**, aux dits systèmes de réservoirs, on ajoute en combinaison

a) pour réduire la concentration en phosphate: un acétate, formiate, tartrate et/ou citrate de $Al^{3+}$, $Fe^{3+}$, $TiO^{2+}$, et/ou $ZrO^{2+}$ ;
b) pour réduire la concentration en nitrate ou pour limiter l'augmentation de la teneur en nitrate: au moins un composé organique biodégradable exempt de N et soluble dans l' eau ;
c) pour augmenter la dureté en carbonate ou la concentration en $HCO_3^-$: un sel de $Na^+$, $Ca^{2+}$, $Mg^{2+}$, ou $Sr^{2+}$ d'un acide citrique, acétique, lactique, tartrique, formique, propionique ou malique ;
d) pour augmenter la dureté totale ou la concentration en hydrogénocarbonate de $Ca^{2+}$ et de $Mg^{2+}$: un mélange de sels de $Ca^{2+}$ et $Mg^{2+}$ d'acides organiques choisis parmi les sels de $Ca^{2+}$ d'un acide formique, acétique, propionique, lactique ou malique et les sels de $Mg^{2+}$ d'un acide acétique, lactique, citrique ou tartrique, éventuellement en mélange avec des chlorures et/ou des sulfates de $Ca^{2+}$ et $Mg^{2+}$, et
e) pour augmenter la concentration en $CO_2$: au moins un composé biodégradable.

**2.** Procédé selon la revendication 1, **caractérisé en ce que** la combinaison est ajoutée sous forme d'un concentré aqueux.

**3.** Procédé selon l'une des revendications 1 et 2, **caractérisé en ce que** l'on ajoute 1 à 2 fois par semaine de 1 à 100, de préférence de 10 à 40 mg/l de citrate d'aluminium et/ou de fer(III).

**4.** Procédé selon la revendication 1 ou 2, **caractérisé en ce que** pour réduire la concentration en nitrate ou pour limiter l'augmentation de la teneur en nitrate, on ajoute en tant que composé organique biodégradable un composé aliphatique, tel par exemple un alcool, un sucre ou un acide organique.

**5.** Procédé selon la revendication 4, **caractérisé en ce que** l'on ajoute de la glycérine, du sorbitol ou de l'éthanol, un pentose, un hexose ou du saccharose ou un acide acétique, citrique, tartrique ou lactique.

**6.** Procédé selon la revendication 4 ou 5, **caractérisé en ce que** l'on ajoute un mélange d'acide citrique ou acétique et de saccharose ou plus particulièrement un mélange d'acide citrique, d'acide tartrique et de saccharose.

**7.** Procédé selon l'une des revendications 4 à 6, **caractérisé en ce que** l'on ajoute tous les 2 jours ou 3 fois par semaine, de 15 à 100, de préférence de 5 à 40 mg/l au composé ou mélange.

**8.** Procédé selon la revendication 1, **caractérisé en ce que** l'on ajoute en outre pour un contrôle convenable de la dureté totale de la composition du chlorure et/ou du sulfate de $Ca^{2+}$ et $Mg^{2+}$.

**9.** Procédé selon la revendication 1 ou 2, **caractérisé en ce que** pour augmenter la concentration en $CO_2$, on ajoute tous les jours ou tous les 2 jours de l'acide carbonique et/ou un alcool et/ou un sucre.

**10.** Procédé selon la revendication 9, **caractérisé en ce que** l'on ajoute de la glycérine, du sorbitol ou de l'éthanol, un pentose, un hexose ou du saccharose ou un acide acétique, citrique ou lactique.

**11.** Procédé selon l'une des revendications 9 et 10, **caractérisé en ce que** l'ajout est quotidiennement de 1 à 20, de préférence 3 à 10 mg/l ou tous les 2 jours de 2 à 40, de préférence 6 à 20 mg/l au composé biodégradable ou à un mélange de tels composés.

**12.** Procédé selon la revendication 1 ou 2, **caractérisé en ce que** l'on ajoute en outre pour compenser les besoins en $O_2$ des systèmes de réservoirs des quantités équivalentes d'oxygène ou de peroxyde d'hydrogène.

**13.** Procédé selon les revendications 1 à 12, **caractérisé en ce que** la séquence des ajouts est quotidienne, tous les 2 jours, 1 ou 2 fois par semaine à 1 fois toutes les 2 semaines ou selon les besoins.

**14.** Produit formé de plusieurs constituants combinés pour améliorer la qualité de l'eau de systèmes de réservoirs biologiques, **caractérisé en ce qu'**ils consistent en:

a) au moins un acétate, un formiate, un tartrate et en particulier citrate de $Al^{3+}$, $Fe^{3+}$, $TiO^{2+}$-, et/ou $ZrO^{2+}$ difficilement soluble ou facilement soluble ;
b) au moins un composé organique biodégradable, exempt de N et soluble dans l'eau;
c) au moins un sel de $Na^+$, $Ca^{2+}$, $Mg^{2+}$ ou $Sr^{2+}$ d'un acide citrique, acétique, lactique, tartrique, formique, propionique ou malique, et
d) un mélange de sels de $Ca^{2+}$ et $Mg^{2+}$ d'acides organiques choisis parmi les sels de $Ca^{2+}$ d'un acide formique, acétique, propionique, lactique ou malique et les sels de $Mg^{2+}$ d'un acide acétique, lactique, citrique ou tartrique, éventuellement en mélange avec des chlorures et/ou sulfates de $Ca^{2+}$ et $Mg^{2+}$.

**15.** Produit formé de plusieurs constituants selon la revendication 14, **caractérisé en ce qu'**il contient:

a) un formiate, tartrate et/ou en particulier un citrate de $Al^{3+}$, $Fe^{3+}$, $TiO^{2+}$, et/ou $ZrO^{2+}$ ;
b) de la glycérine, du sorbitol ou de l'éthanol, un pentose, un hexose ou du saccharose ou un acide acétique, citrique, tartrique ou lactique ;
c) un sel de $Na^+$, $Ca^{2+}$, $Mg^{2+}$ ou $Sr^{2+}$ d'un acide citrique, acétique, lactique, tartrique, formique, propionique ou malique ;
d) un mélange de sels de $Ca^{2+}$ et $Mg^{2+}$ d'acides organiques choisis parmi les sels de $Ca^{2+}$ d'un acide formique, acétique, propionique, lactique ou malique et les sels de $Mg^{2+}$ d'un acide acétique, lactique, citrique ou tartrique, éventuellement en mélange avec des chlorures et/ou sulfates de $Ca^{2+}$ et $Mg^{2+}$.

**16.** Produit formé de plusieurs constituants selon la revendication 14 ou 15, dans lequel les constituants sont sous forme solide.

**17.** Produit formé de plusieurs constituants selon la revendication 14 ou 15, dans lequel les constituants sont sous forme de concentré.

**18.** Produit formé de plusieurs constituants selon la revendication 16, où la forme solide est formée de poudre, granulat ou extrudat, ou de pellets, capsules ou cachets.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19704953 A
- EP 0882675 A